# EUROPEAN PATENT SPECIFICATION

(11) **EP 0 322 879 B1**
(45) Date of publication and mention of the grant of the patent: **08.09.1993**
(21) Application number: 88121771.5
(22) Date of filing: 28.12.1988
(51) Int. Cl.: H04N 1/40, H04N 1/46

(54) **An image processor having a density indicator**
Bildverarbeitungsgerät mit Dichteanzeiger
Dispositif de traitement d'image avec indicateur de densité

(30) Priority: 29.12.1987 JP 332840/87
(43) Date of publication of application: 05.07.1989
(73) Proprietor: Dainippon Screen Mfg. Co., Ltd., Kamikyo-ku Kyoto 602 (JP)
(72) Inventor: Akiyama, Kazuya c/o Dainippon Screen Mfg. Co., Ltd, Horikawa-Dori Kamikyo-ku Kyoto (JP)
(74) Representative: Goddar, Heinz J., Dr.

(56) References cited:
- GB-A- 2 121 645
- GB-A- 2 178 628
- US-A- 3 972 066

## Description

This invention relates to an image processor having a density indicator for indicating the optical density level at a reference point on an image which is obtained by correcting an original image through an image correction process such as a colour correction and a tone correction.

As is well known in the art, an image processor such as a process scanner is so constructed as to scan an original to separate the original image data into a plurality of colour component data. Each colour component data is corrected through a colour image correction process, such as colour correction and tone correction, to obtain a desirable recording image or printed image (e.g. GB-A-2121645).

Prior to the image scanning, parameters required for specifying the image correction rule are stored in the process scanner according to a predetermined plane for image recording, to set up the process scanner. The setting of the parameters is usually carried out in the image scanner for each original.

In the setting-up process, a reference point is selected in the original image, and the respective colour densities at the reference point are read with a pick-up head. Signals expressing the colour densities are corrected according to the image correction rule specified by the parameters, to derive corrected signals expressing the corrected colour densities of the reference point. The respective levels of the corrected colour densities are monitored with a single density indicator in time series, whereby an operator can determine whether or not the current values of the parameters are the desired ones. If it is found that the current values of the parameters are improper, the control knobs are re-set until the corrected colour densities have the desired levels.

The conventional process scanner described above has a disadvantage in that the corrected colour densities of another point whose colour is identical to that of the reference point sometimes deviate from the desired ones, since the corrected colour density of only one reference point is monitored in the setting-up process.

The present invention aims to provide an image procesor delivering original image data which truly expresses an original image.

According to the present invention, an image processor comprises image data storage means for storing image data expressing respective density levels of a plurality of reference points which are arbitrarily selected on the original image, correction means for correcting the image data according to an image correction rule stored in the image processor during a setting-up process, thereby to provide corrected image data expressing respective corrected density levels of the reference points, and visual means for visually indicating the respective corrected density levels simultaneously relating to said plurality of reference points.

In one embodiment of the present invention, the visual means has an image display on which the respective corrected density levels are displayed together with the original image.

In another embodiment of the present invention, the visual means has a plurality of density indicator units for indicating the respective corrected density levels respectively.

The present invention also provides a method of setting up an image processor, and the method comprising the steps of preparing an original image, arbitrarily selecting a plurality of reference points on the original image, obtaining density data expressing respective density levels of the reference points, correcting the density data according to a predetermined image correction rule, to obtain corrected image data expressing respective corrected density levels of the reference points, visually indicating the respective corrected density levels relating to said plurality of reference points on visual means simultaneously, and adjusting the image correction rule to a desired correction rule while monitoring the respective corrected density levels indicated in the visual means, thereby to set up the image processor.

Accordingly, an object of the present invention is to provide an image processor having a setting-up process which can be conducted in a short time without errors.

Another object of the present invention is to provide a method of setting up an image processor at a high speed.

In order that the invention may be more readily understood, embodiments thereof will now be described by way of example with reference to the accompanying drawings, in which:
Figure 1 is a block diagram illustrating a flat bed process scanner according to a preferred embodiment of the present invention,
Figure 2 is an image view being displayed on a CRT employed in the preferred embodiment,
Figure 3 is another image view displayed on the CRT,
Figure 4 is a block diagram showing a drum type process scanner according to another preferred embodiment of the present invention, and
Figure 5 is a block diagram showing switching circuits and density indicators employed in the process scanner shown in Figure 4.

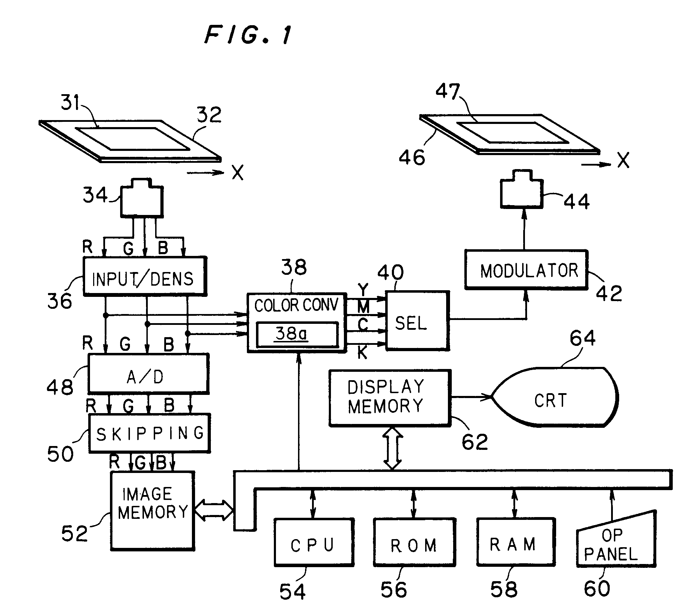

Fig. 1 is a block diagram of a flat bed process scanner embodying the present invention. A colour original 31 is placed on a transparent table 32. A pickup head 34 having three linear image sensors is provided under the table 32, facing the original 31. The linear image sensors may be CCD linear arrays for photoelectric conversion. The table 32 and the pickup head 34 are relatively movable in the direction X, whereby the image of the original 31 is scanned by the pickup head 34. The respective colour component signals for red (R), green (G) and blue (B) obtained by the pickup head 34 are transmitted to an input/density convertor 36, to be converted therein into respective colour density signals.

The colour density signals are supplied to a colour converter 38 and an analogue to digital (A/D) converter 48. The colour converter 38 has a memory 38a which stores a colour image correction rule in the form of a look-up table, the colour image correction rule being predetermined in a setting-up process described later. The colour density signals for the R, G, B-colours are converted into colour density signals for yellow (Y), magenta (M), cyan (C) and black (K) in the colour converter 38, while being subjected to a correction process according to the correction rule. One of the corrected colour density signals is selected by a selector 40, and then delivered to a modulator 42. The modulator 42 modulates a laser beam in accordance with the corrected colour density signal currently delivered thereto, and the modulated laser beam is focussed onto a colour photosensitive film 47 by a recording head 44. The photosensitive film 47 is placed on a transparent table 46 which is moved in the direction X, so that the photosensitive film 47 is scanned by the modulated laser beam. Through the scanning of the photosensitive film, colour separated images for Y, M, C or K are recorded on the photosensitive film 47.

Digital colour density signals obtained by the A/D converter 48 are supplied to a pixel skipping circuit 50. The pixel skipping circuit 50 is operable to skip the digital colour density signals at a predetermined skipping rate, thereby to reduce the amount of information expressed by the colour density signals. The colour density signals thus skipped are delivered to an image memory 52, and the respective colour density data expressed by the colour density signals is stored in the memory 52.

The colour density data stored in the memory 52 is transmitted to a CPU 54, to be subjected to a colour image correction process according to a simulation program previously stored in a RAM 58. The corrected data is transmitted to the RAM 58, and stored therein. A program for controlling the CUP 54 and character data for generating a character image are previously stored in a ROM 56.

An operation panel 60 is provided with control knobs used in a setting-up process of the process scanner, and other manual switches. A display memory 62 is electrically coupled to the elements 52-60, and stores image data to be displayed on a CRT 64 in one-to-one correspondence between the image data and imaging positions on the CRT 64.

As will be clearly understood from the following description, the memory 52 and the CRT 64 correspond respectively to "image data storage means" and "visual means" in the present invention, while the combination of the CPU 54, the ROM 56 and the RAM 58 corresponds to "correction means".

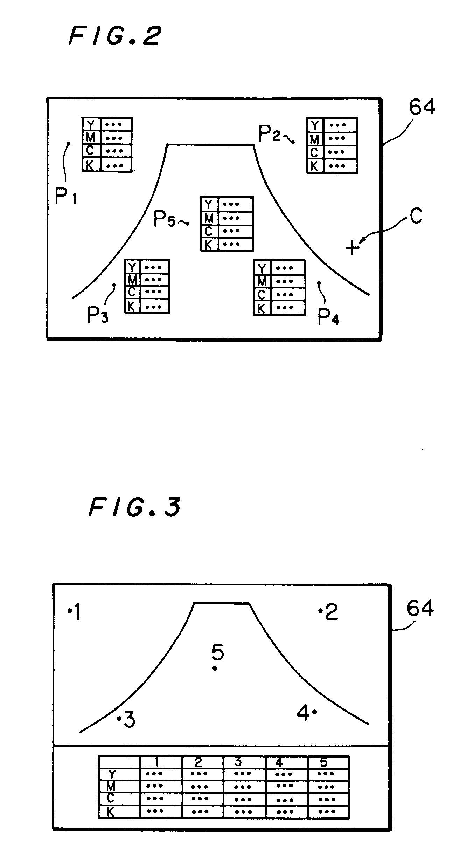

The setting-up process of the process scanner is conducted as follows: First, the original 31 is placed on the table 32 and scanned by the pickup head 34, whereby the respective colour component signals for R, G, B-colour are obtained. The colour component signals are converted to colour density data, and then stored in the image memory 52. The colour density data stored in the image memory 52 is accessed and transmitted to the CRT 64 through the display memory 62, whereby the original image is displayed on the CRT 64 together with a cursor image C, as shown in Fig. 2.

Then, the control knob provided on the operation panel 60 is manually operated, thereby to move the cursor C to a desired position on the CRT 64. When an enter-key provided on the operation panel 60 is operated the current position of the cursor C is detected and input to the CPU 54, whereby a reference point on the original image is specified. Through repetition of the above indicated steps, a plurality of reference points P₁ through P₅, for example, are selected and indicated on the original image being displayed.

When the selection is completed, the respective colour density data for the reference points is read out from the image memory 52. The CPU 54 corrects the respective colour density data according to the simulation program previously stored in the RAM 58, for each reference point. The corrected colour density data for Y, M, C and K-colours with respect to each reference point is stored in the RAM 58.

The corrected colour density data is read out from the RAM 58, and transmitted to the CRT 64 through the display memory 62, whereby the respective density levels of the reference points expressed by the corrected density data are simultaneously displayed in the neighbourhood of the respective corresponding reference points on the CRT 64. Preferably, the density levels for Y, M, C and K-colours are displayed in the form of a table, as shown in Fig. 2.

The operator then operates the control knobs to change the image correction rule to a desired one, while monitoring the density levels on the CRT 64. In response to the operation, the density levels corresponding to the new correction rule are calculated by the CPU 54 according to the simulation program. The new density levels thus obtained are simultaneously displayed on the CRT 64 in place of the old levels. When all of the respective density levels for the reference points P₁ through P₅ are set to the desired levels, the operator actuates the enter-key. Data expressing the image correction rule is transmitted to the memory 38a, to be stored therein in the form of a correction table. The setting-up process is now completed.

After the setting-up process, the original 31 is scanned again by the pickup head 34. The colour component signals thus obtained are converted to colour density signals by the input/density converter 36.

The colour density signals are converted into those for Y, M, C and K-colour by the colour converter 38, while being subjected to the correction according to the correction table. One of the corrected colour density signals is selected by the selector 40 for delivery to the modulator 42. The scanning exposure of the photosensitive film 47 is then carried out, whereby a colour component image is recorded on the photosensitive film 47.

In the setting-up process indicated above, the respective density levels of the reference points P₁ through P₅ may be simultaneously displayed in predetermined areas of the display screen of the CRT 64, as shown in Fig. 3. In this case, the respective positions of the reference points are displayed with images of the numerals "1" to "5", while the density levels are displayed in a bottom region of the display screen with the corresponding numerals, for example. Alternatively, the respective density levels for the reference points may be displayed in the form of a graph. It is also possible to display the original image on one CRT, while the density levels are displayed on another CRT.

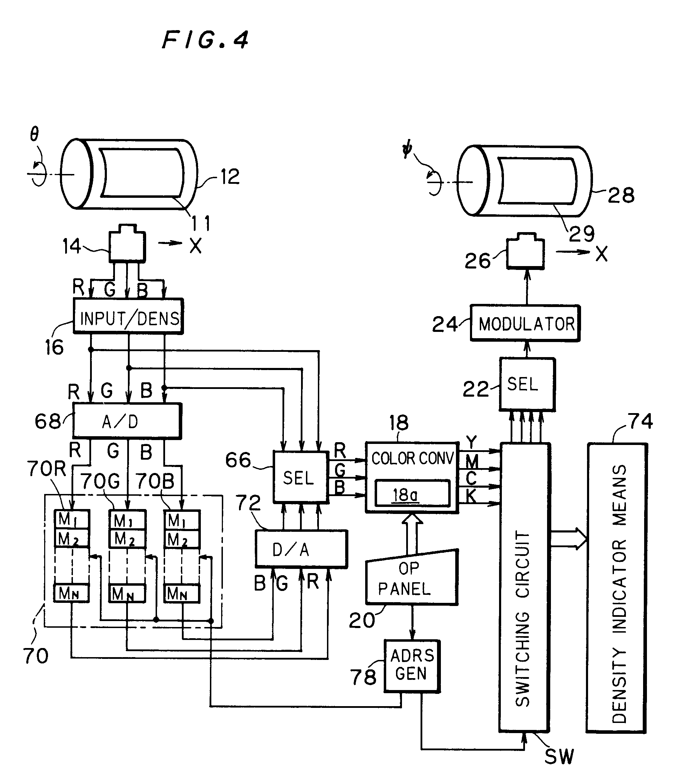

Fig. 4 is a block diagram showing a drum type process scanner according to another preferred embodiment of the invention. An original 11 is wrapped around an original drum 12 and is rotated with the original drum 12 in the direction ϑ. A pickup head 14 is moved relative to the drum in the direction X, while reading the original image. Colour component signals for R, G and B-colours are converted into respective density signals by an input/density converter 16. The colour density signals are further converted into digital signals by an A/D converter 68, and the respective colour density levels expressed by the digital colour density signals are stored in an image memory 70, which constitutes "image data storage means" of the present invention. The image memory 70 has a plurality of memories 70R, 70G and 70B in which the respective colour density data for R, G and B-colours are stored. As will be understood later, since only the colour density data for N reference points, where N is greater than one, are stored in each memory, each of the memories 70R, 70G and 70B has storage areas M₁ to M_{N} for the respective reference points.

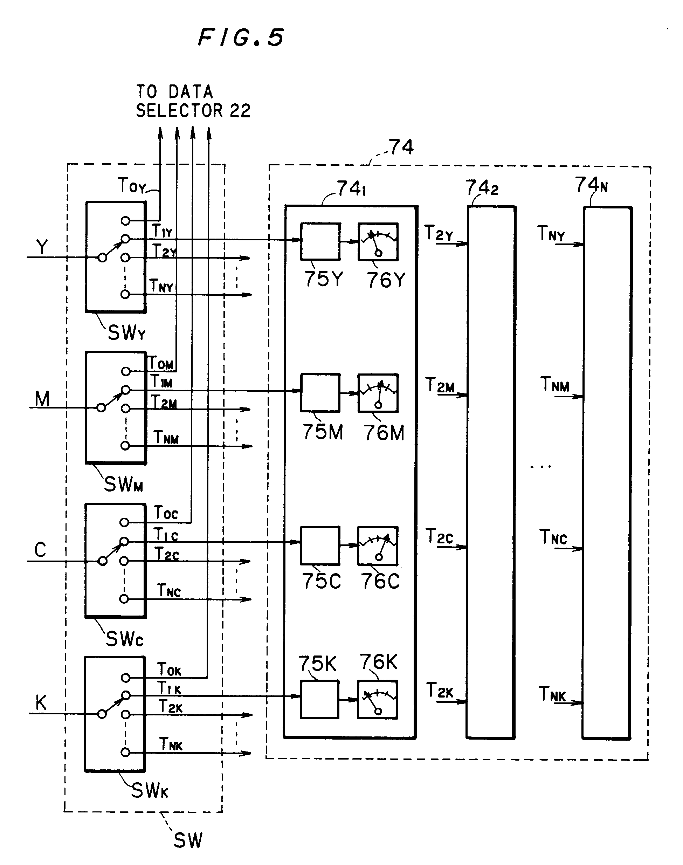

The colour density data read out from the image memory 70 is supplied to a colour converter 18 through a D/A converter 72 and a selector 66. The colour converter 18 has a memory 18a in which a colour image correction table is stored in a setting-up process. The colour density data is converted into data for Y, M, C and K-colours, while being subjected to image correction according to the correction table, and the converted data is delivered to a switching circuit SW. As shown in Fig. 5, the switching circuit SW comprises respective switches or demultiplexers SW_{Y}, SW_{M}, SW_{C} and SW_{K} for the Y, M, C and K-colours. Each of the switches SW_{Y}-SW_{K} has an output terminal T_{OY}, T_{OM}, T_{OC} or T_{OK} connected to a data selector 22 (Fig. 4) and other terminals T_{1Y}-T_{NY}, T_{1M}-T_{NM}, T_{1C}-T_{NC} or T_{1K}-T_{NK} connected to density indicator units 74₁ -74_{N}, respectively, the density indicator units 74₁ -74_{N} being provided in a density indicator means 74.

The density indicator units 74₁-74_{N} correspond to a plurality of reference points, respectively, and are operable to simultaneously indicate the respective density levels of Y, M, C and K-colours with respect to the reference points. More particularly, each of the density indicator units 74₁-74_{N} has latch circuits 75Y-75K for latching the colour density signals of Y, M, C and K-colours supplied from the switching circuit SW, and density meters 76Y-76K connected to the latch circuit 75Y-75K and operable to indicate the colour density levels, respectively.

Referring to Fig. 4, the process scanner further comprises an operation panel 20 having control knobs, and an address generator 78 for generating address signals. The address signal is used for selecting one of the storage areas M₁-M_{N} in each of the memories 70R, 70G and 70B, and selecting one of the output terminals in each of the switches SW_{Y}-SW_{K}. A selector 22, a modulator 24 and a recording head 26 are provided in the process scanner, in similar manner to Fig. 1. A photosensitive film 29 is wound around a recording drum 28 and rotated in the direction φ with the recording drum 28, and a colour separated image is recorded on the photosensitive film 29 in a recording process.

In the setting-up process, each of the respective input terminals of the switches SW_{Y}-SW_{K} are electrically connected to the output terminal T_{1Y} (T_{1M}, T_{1C}, T_{1K}), whereby the signal path from the colour converter 18 to the density indicator 74₁ is established. At the same time, the data selector or multiplexer 66 selects its input signals supplied from the D/A converter 72. The original drum 12 and the pickup head 14 are manually rotated and moved, respectively, and they are stopped when a first reference point arbitrarily selected on the original image comes to a position facing the pickup head 14. Then, an operator operates an enter-key provided on the operation panel 20, so that colour image light corresponding to the first reference point is input to the pickup head 14. The colour density signals obtained by the input/density converter 16 are supplied to the image memory 70 through the A/D converter 68. In the image memory 70, the respective first storage areas M₁ are selected by the address signal supplied from the address generator 78, so that the colour density data for respective colours are stored in the respective first storage areas M₁.

The designation and the storage operation are repeated for other reference points while serially selecting the storage areas M₂-M_{N}, so that the respective colour density data for second to N-th reference points is stored in the storage regions M₂-M_{N} for each colour, respectively.

When the storage operation is completed, the control knobs provided on the operation panel 20 are manually operated, thereby to set a desired image correction rule in the memory 18a as a colour image correction table. Then, the address generator 78 generates an address signal for scanning the respective addresses of the storage areas M₁-M_{N} in series, and the respective colour density data for the first to N-th reference points is read out from the memories 70R, 70G and 70B. The respective colour density data is supplied to the colour converter 18 through the D/A converter 72 and the data selector 66, and is converted into the colour density signals for Y, M, C and K-colours while being subjected to the image correction according to the correction table. The corrected colour density signals for Y, M, C and K-colours thus obtained are delivered to the switching circuit SW.

Each of the switches SW_{Y}-SW_{K} serially selects output terminals in the order of T_{1Y}-T_{NY} (T_{1M}-T_{NM}, T_{1C}-T_{NC}, T_{1K}-T_{NK}) under the control with the address signal. Since the address signal generated in the address generator 78 is used in common to the image memory 70 and the switching circuit SW, the serial read-out operation in the image memory 70 is synchronized with the serial selection of the output terminals in the switching circuit SW, whereby the respective corrected colour density data representing the first to the N-th reference points is delivered to the density indicator units 74₁-74_{N}, respectively. Accordingly, the respective colour density levels of Y, M, C and K-colours representing the first to N-th reference points are latched by the latch circuits 75Y-75K and simultaneously indicated at the density meters 76Y-76K of the density indicator units 74₁-74_{N}, respectively.

The operator then operates the control knobs again while monitoring the respective colour density levels of the first to N-th reference points indicated on the respective density meters 76Y-76K of the density indicator units 74₁-74_{N}, thereby to try to adjust the correction rule to the desired one. The new correction rule thus obtained is stored in the memory 18a in place of the old correction rule, and the above indicated process is repeated until the desired density levels are indicated in the respective density meters 76Y-76K. When the desired density levels are obtained the setting-up process is completed.

After the setting-up process, the data selector 16 is switched to be electrically connected to the input/density converter 16, while the switching circuit selects the output terminals T_{OY}-T_{OK}. The original 11 is scanned by the pickup head 14, whereby colour component signals representing the original image are obtained. The colour component signals are converted into colour density signals and delivered to the colour converter 18 through the selector 66. The colour density signals for R, G, B-colours are converted into the colour density signals for Y, M, C and K-colours in the colour converter 18 while being subjected to the colour image correction according to the correction table stored in the memory 18a. The corrected colour density signals are transmitted to the data selector 22 through the switching circuit SW, and one of them is selected to be delivered to the modulator 24. The photosensitive film 29 is scanned by the modulated laser beam emitted from the recording head 26, whereby a colour component image is recorded on the photosensitive film 24.

According to the present invention, at least two sets of density indicators are required for simultaneously displaying the respective density levels of a plurality of reference points. When the number of the reference points exceeds that of the density indicator units, the respective levels may be indicated on the density indicators in series. If density meters operable to hold the respective colour density data such as peak meters are employed, latch circuits 75Y-75K may be omitted. The density display means may be displays other than those employed in the preferred embodiments.

The present invention can be also applied to a process scanner for recording four colour component images of Y, M, C and K-colours through one scanning of the photosensitive film, a monochromatic process scanner, and the like. The original image data may be supplied from a disc memory, a TV camera, a graphic computer, or other input devices.

As understood from the above description, since the respective density levels of reference points are simultaneously indicated or displayed on the density display means in the setting-up process, the setting-up process can be carried out while simultaneously monitoring the respective density levels, so that an image processor such as a process scanner can be set up in a short time without errors.

The features disclosed in the foregoing description, in the following claims and/or in the accompanying drawings may, both separately or in any combination thereof, be material for realising the invention in diverse forms thereof.

## Claims

1. An image processor for generating original image data expressing an original image (31), characterised in that the image processor comprises image data storage means (52) for storing image data expressing respective density levels of a plurality of reference points (P) which are arbitrarily selected on said original image (31), correction means (54, 56, 58) for correcting said image data according to an image correction rule stored in said image processor through a setting-up process, thereby to provide corrected image data expressing respective corrected density levels of said reference points, and visual means (64) for simultaneously visually indicating said respective corrected density levels relating to said plurality of reference points.

2. An image processor in accordance with claim 1, wherein said visual means (64) has an image display on which said corrected density levels are displayed together with said original image (31).

3. An image processor in accordance with claim 2, wherein said corrected density levels are displayed at respective neighbourhoods of said reference points on said image display (64).

4. An image processor in accordance with claim 2, wherein said corrected density levels are displayed at a predetermined position on said image display (64) together with respective reference symbols, and said reference symbols are displayed at respective neighbourhoods of said reference points (P) on said image display (64).

5. An image processor in accordance with any one of claims 1 - 4 wherein said visual means (64) has a plurality of density indicator units (74) for indicating respective corrected density levels.

6. An image processor in accordance with claim 5, wherein said image processor is a colour image processor, and each of said indicator units (74) has a plurality of density indicators corresponding to respective colour components included in said corrected image data.

7. An image processor in accordance with claim 6, wherein each of said density indicators has a density meter (76).

8. A method of setting up an image processor, in which an original image (31) is prepared characterised in that the method comprises the steps of arbitrarily selecting a plurality of reference points (P) on said original image (31), obtaining density data expressing respective density levels of said reference points (P), correcting said density data according to a predetermined image correction rule, to obtain corrected image data expressing respective corrected density levels of said reference points (P), visually indicating said respective corrected density levels relating to said plurality of reference points on visual means (64) simultaneously, and adjusting said image correction rule to a desired correction rule while monitoring said respective corrected density levels indicated on said visual means (64), thereby setting-up said image processor.

9. A method in accordance with claim 8, wherein the method further includes the steps of displaying said original image (31) on said image display (64) and serially designating said reference points (P) on said original image (31) displayed on said image display (64) with a cursor (C).

10. A method in accordance with claim 8 or 9, wherein the method further includes the step of displaying said corrected density levels together with said original image (31).

11. A method in accordance with any one of claims 8 - 10, wherein said corrected density levels are displayed at respective neighbourhoods of said reference points (P).

12. A method in accordance with any one of claims 8 - 11, wherein the method further includes the step of indicating said corrected density levels with a plurality of respective density indicators.

13. An apparatus provided in a colour process scanner, for indicating respective colour density levels of a plurality of reference points arbitrarily selected on an original image (31), characterised in that said apparatus comprises a plurality of density indicator units (74) each having a plurality of density indicators for indicating respective colour density levels relating to said plurality of reference points for each colour and means for receiving colour density data expressing said respective colour density levels from the exterior of said apparatus, to input said colour density data to respective density indicator units (74).

## Patentansprüche

1. Bildverarbeitungsvorrichtung zum Erzeugen von Originalbilddaten, die ein Originalbild (31) ausdrücken, **gekennzeichnet** durch eine Bilddaten-Speichereinrichtung (52) zum Speichern von Bilddaten, die jeweilige Dichtepegel mehrerer Bezugspunkte (P) ausdrücken, welche in dem Originalbild (31) willkürlich gewählt sind, eine Korrekturvorrichtung (54, 56, 58) zum Korrigieren der Bilddaten nach Maßgabe einer in der Bildverarbeitungsvorrichtung gespeicherten Bildkorrekturregel durch ein Einrichtungsverfahren, um dabei korrigierte Bilddaten vorzusehen, die entsprechende korrigierte Dichtepegel der Bezugspunkte ausdrücken, und eine Sichtvorrichtung (64) zum gleichzeitigen visuellen Anzeigen der jeweiligen auf die mehreren Bezugspunkte bezogenen Dichtepegel.

2. Bildverarbeitungsvorrichtung nach Anspruch 1, bei der die Sichtvorrichtung (64) eine Bildanzeige aufweist, auf der die korrigierten Dichtepegel zusammen mit dem Originalbild (31) angezeigt werden.

3. Bildverarbeitungsvorrichtung nach Anspruch 2, bei der die korrigierten Dichtepegel jeweils in der Nähe der Bezugspunkte auf der Bildanzeige (64) angezeigt werden.

4. Bildverarbeitungsvorrichtung nach Anspruch 2, bei der die korrigierten Dichtepegel an vorgegebenen Positionen auf der Bildanzeige (64) zusammen mit entsprechenden Bezugssymbolen angezeigt werden, und bei der die Bezugssymbole jeweils in Nachbarbereichen der Bezugspunkte (P) auf der Bildanzeige (64) angezeigt werden.

5. Bildverarbeitungsvorrichtung nach einem der Ansprüche 1 bis 4, bei der die Sichtvorrichtung (64) mehrere Dichte-Indikatoreinheiten (74) zum Angeben entsprechender korrigierter Dichtepegel aufweist.

6. Bildverarbeitungsvorrichtung nach Anspruch 5, bei der die Bildverarbeitungsvorrichtung eine Farbbildverarbeitungsvorrichtung ist, und bei der jede der Indikatoreinheiten (74) mehrere Dichte-Indikatoren aufweist, die entsprechenden, in den korrigierten Farbdaten enthaltenen Farbkomponenten entsprechen.

7. Bildverarbeitungsvorrichtung nach Anspruch 6, bei der jeder Dichte-Indikator eine Dichte-Meßvorrichtung (76) aufweist.

8. Verfahren zum Einrichten einer Bildverarbeitungsvorrichtung, in der ein Originalbild (31) aufbereitet wird, **gekennzeichnet** durch die Verfahrensschritte: willkürliches Auswählen mehrerer Bezugspunkte (P) in dem Originalbild (31), Erhalten von Dichtedaten, welche entsprechende Dichtepegel der Bezugspunkte (P) ausdrücken, Korrigieren der Dichtedaten nach Maßgabe einer vorgegebenen Bildkorrekturregel, um korrigierte Bilddaten zu erhalten, welche entsprechende korrigierte Dichtepegel der Bezugspunkte (P) ausdrücken, gleichzeitiges optisches Anzeigen der entsprechenden korrigierten, auf die mehreren Bezugspunkte bezogenen Dichtepegel auf einer Sichtvorrichtung (64) und Anpassen der Bildkorrekturregel an eine gewünschte Korrekturregel, während die jeweiligen auf der Sichtvorrichtung (64) angezeigten korrigierten Dichtepegel überwacht werden, wodurch die Bildverarbeitungsvorrichtung eingerichtet wird.

9. Verfahren nach Anspruch 8, mit den weiteren Verfahrensschritten: Anzeigen des Originalbildes (31) auf der Bildanzeige (64) und serielles Bezeichnen der Bezugspunkte (P) des auf der Bildanzeige (64) dargestellten Originalbildes (31) mit einem Cursor (C).

10. Verfahren nach Anspruch 8 oder 9, bei dem ferner die korrigierten Dichtepegel zusammen mit dem Originalbild (31) angezeigt werden.

11. Verfahren nach einem der Ansprüche 8 bis 10, bei dem die korrigierten Dichtepegel jeweils in der Nähe der Bezugspunkte (P) angezeigt werden.

12. Verfahren nach einem der Ansprüche 8 bis 11, bei dem ferner die korrigierten Dichtepegel mit mehreren zugeordneten Dichte-Indikatoren angezeigt werden.

13. Einrichtung zum Angeben jeweiliger Farbdichtepegel mehrerer Bezugspunkte, die willkürlich in einem Originalbild (31) gewählt sind, wobei die Einrichtung in einem Farbprozeß-Scanner vorgesehen ist, **gekennzeichnet** durch mehrere Dichte-Indikatoreinheiten (74), die jeweils mehrere Dichte-Indikatoren zum Angeben jeweils auf die mehreren Bezugspunkte bezogener Farbdichtepegel für jede Farbe aufweisen, und durch eine Vorrichtung zum Empfangen der Farbdichtedaten, welche die jeweiligen Farbdichtepegel ausdrücken, von außerhalb der Einrichtung, um die Farbdichtedaten in die jeweiligen Dichte-Indikatoreinheiten (74) einzugeben.

## Revendications

1. Dispositif de traitement d'image pour produire des données d'image originale définissant une image originale (31), caractérisé en ce que le dispositif de traitement d'image comporte des moyens de mémorisation d'image (52) pour mémoriser des données d'image définissant des niveaux de densité respectifs d'une pluralité de points de référence (P) qui sont arbitrairement choisis sur ladite image originale (31), des moyens de corrections (54, 56, 58) pour corriger lesdites données d'image suivant une règle de correction d'image mémorisée dans ledit dispositif de traitement d'image au moyen d'une opération de réglage, pour produire des données d'image corrigées définissant des niveaux de densité respectifs corrigés desdits points de référence, ainsi que des moyens de visualisation (64) pour indiquer simultanément de façon visuelle lesdits niveaux de densité respectifs corrigés de ladite pluralité de points de référence.

2. Dispositif de traitement d'image selon la revendication 1, dans lequel lesdits moyens de visualisation (64) comportent un élément d'affichage d'image sur lequel lesdits niveaux de densité corrigés sont affichés conjointement avec ladite image originale (31).

3. Dispositif de traitement d'image selon la revendication 2, dans lequel lesdits niveaux de densité corrigés sont affichés dans des zones respectives voisines desdits points de référence sur ledit élément d'affichage d'image (64).

4. Dispositif de traitement d'image selon la revendication 2, dans lequel lesdits niveaux de densité corrigés sont affichés en un emplacement prédéterminé dudit élément d'affichage d'image (64) conjointement avec des symboles de référence respectifs, lesdits symboles de référence étant affichés dans des zones respectives voisines desdits points de référence (P) sur ledit élément d'affichage d'image (64).

5. Dispositif de traitement d'image selon l'une quelconque des revendications 1 à 4, dans lequel lesdits moyens de visualisation (64) comportent une pluralité d'unités indicatrice de densité (74) pour indiquer les niveaux de densité respectifs corrigés.

6. Dispositif de traitement d'image selon la revendication 5, dans lequel ledit dispositif de traitement d'image est un dispositif de traitement d'image en couleurs, et dans lequel chacune desdites unités indicatrices (74) comporte une pluralité d'indicateurs de densité correspondant à des composantes de couleurs respectives comprises dans lesdites données d'image corrigées.

7. Dispositif de traitement d'image selon la revendication 6, dans lequel chacun desdits indicateurs de densité comporte un compteur de densité (76).

8. Procédé pour régler un dispositif de traitement d'image, dans lequel une image originale (31) est préparée, caractérisé en ce que le procédé comporte les étapes de sélection arbitraire d'une pluralité de points de référence (P) de ladite image originale (31), d'obtention de données de densité définissant les niveaux de densité respectifs desdits points de référence (P), de correction desdites données de densité suivant une règle de correction d'image prédéterminée, pour obtenir des données d'image corrigées définissant des niveaux de densité respectifs corrigés desdits points de référence (P), d'indication visuelle simultanée desdits niveaux de densité respectifs corrigés de ladite pluralité de points de référence sur des moyens de visualisation (64), et de réglage de ladite règle de correction d'image suivant une règle de correction désirée, tandis que l'on contrôle lesdits niveaux de densité respectifs corrigés indiqués sur lesdits moyens de visualisation (64), en réglant ainsi ledit dispositif de traitement d'image.

9. Procédé selon la revendication 8, dans lequel le procédé comporte en outre les étapes d'affichage de ladite image originale (31) sur ledit élément d'affichage d'image (64) et de désignation successive avec un curseur (C) desdits points de référence (P) sur ladite image originale (31) affichée sur ledit élément d'affichage d'image (64).

10. Procédé selon la revendication 8 ou la revendication 9, dans lequel le procédé comporte en outre l'étape d'affichage desdits niveaux de densité respectifs corrigés conjointement avec ladite image originale (31).

11. Procédé selon l'une quelconque des revendications 8 à 10, dans lequel lesdits niveaux de densité corrigés sont affichés dans des zones respectives voisines desdits points de référence (P).

12. Procédé selon l'une quelconque des revendications 8 à 11, dans lequel le procédé comporte en outre l'étape d'indication desdits niveaux de densité corrigés à l'aide d'une pluralité d'indicateurs de densité respectifs.

13. Appareil disposé dans un analyseur de traitement de couleurs pour indiquer les densités de couleurs respectives d'une pluralité de points de référence arbitrairement choisis sur une image originale (31), caractérisé en ce que ledit appareil comporte une pluralité d'unités indicatrices de densité (74) dont chacune est munie d'une pluralité d'indicateurs de densité pour indiquer les niveaux de densité de couleur respectifs de ladite pluralité de points de référence pour chaque couleur ainsi que des moyens pour recevoir, à partir de l'extérieur dudit appareil, des données de densité de couleur définissant lesdits niveaux de densité de couleur respectifs, et introduire lesdites données de densité de couleur dans lesdites unités indicatrices de densité respectives (74).
